(19) Europäisches Patentamt
European Patent Office
Office européen des brevets

(11) Veröffentlichungsnummer: **0 471 233 B1**

(12) **EUROPÄISCHE PATENTSCHRIFT**

(45) Veröffentlichungstag der Patentschrift: **30.11.94**

(51) Int. Cl.5: **C09B 62/513**, D06P 1/384

(21) Anmeldenummer: **91112670.4**

(22) Anmeldetag: **27.07.91**

# (54) Wasserlösliche Trisazofarbstoffe.

(30) Priorität: **13.08.90 DE 4025611**

(43) Veröffentlichungstag der Anmeldung:
**19.02.92 Patentblatt 92/08**

(45) Bekanntmachung des Hinweises auf die Patenterteilung:
**30.11.94 Patentblatt 94/48**

(84) Benannte Vertragsstaaten:
**CH DE ES FR GB IT LI**

(56) Entgegenhaltungen:

**CHEMICAL ABSTRACTS, Band 107, Nr. 22, November 1987, Seite 104, Zusammenfassung Nr. 200385u, Columbus, Ohio, US; & IN-A-158 836 (JAYSYNTH DYECHEM PRIVATE LTD) 31-01-1987**

(73) Patentinhaber: **CASSELLA Aktiengesellschaft**
**Hanauer Landstrasse 526**
**D-60386 Frankfurt (DE)**

(72) Erfinder: **Bauer, Wolfgang, Dr.**
**Masurenstrasse 6**
**W-6457 Maintal 3 (DE)**
Erfinder: **Ritter, Josef, Dr.**
**Berliner Strasse 12**
**W-6238 Hofheim (DE)**
Erfinder: **Steckelberg, Willi, Dr.**
**Goldgrabenstrasse 24**
**W-6238 Hofheim (DE)**

(74) Vertreter: **Muley, Ralf, Dr.**
**Cassella AG,**
**Patentabteilung,**
**Hanauer Landstrasse 526**
**D-60386 Frankfurt (DE)**

EP 0 471 233 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft wasserlösliche Trisazofarbstoffe der Formel I

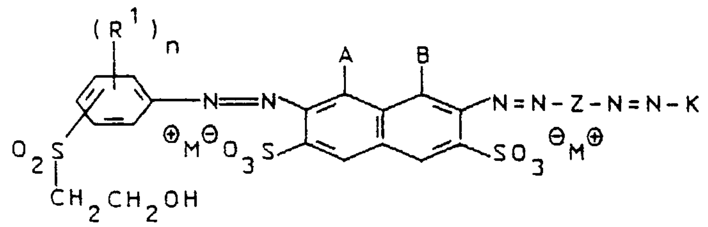

(I)

worin
$R^1$ Wasserstoff, Alkyl mit 1-2 C-Atomen, Alkoxy mit 1-2 C-Atomen, Hydroxy, Halogen, Carboxy, bedeutet,
n = 1 oder 2,
A und B für Hydroxy- oder Aminogruppen stehen, wobei A ungleich B ist,
Z den Rest eines aromatischen Diamins der Formel II

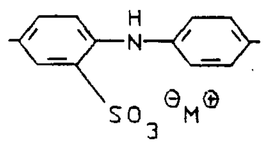

(II)

bedeutet
und K für den Rest einer Kupplungskomponente der Formel III

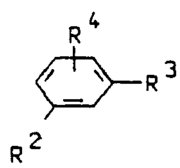

(III)

steht, worin
- $R^2$ eine Hydroxy- oder gegebenenfalls durch $CH_2COOH$ oder $CH_2CH_2OH$ substituierte Aminogruppe,
- $R^3$ Wasserstoff, Hydroxy oder eine gegebenenfalls durch $CH_2COOH$, $CH_2CH_2OH$, $CONH_2$ oder Phenyl substituierte Aminogruppe,
- $R^4$ Wasserstoff, Alkyl mit 1-2 C-Atomen, gegebenenfalls durch Methoxy oder Ethoxy substituiertes Alkoxy mit 1-2 C-Atomen oder $SO_3H$ bedeuten und
- $M^{\oplus}$ ein Kation oder ein Gemisch verschiedener Kationen aus der Reihe Lithium, Natrium, Kalium oder ein gegebenenfalls durch $CH_2CH_2OH$ ein- oder mehrfach substituiertes Ammoniumkation darstellt.

Gegenstand der Erfindung ist ferner ein Verfahren zur Herstellung von Trisazofarbstoffen der allgemeinen Formel I sowie ihre Verwendung zum Färben von natürlichen und synthetischen Fasermaterialien, insbesondere zum Färben von Leder und zur Herstellung von Schreibtinten und Aufzeichnungsflüssigkeiten für das Tintenstrahl-Druckverfahren (ink-jet).

Bevorzugte Trisazofarbstoffe entsprechen der Formel

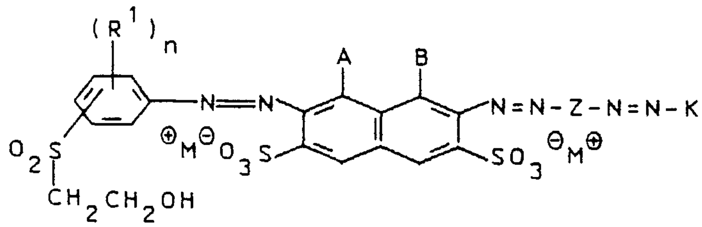

(I)

worin $R^1 = H$,
A, B und Z die bereits genannte Bedeutung haben und K Reste von Kupplungskomponenten der Formel III sind, worin

$R^2 =$ OH, $NH_2$,

H
$N-CH_2CH_2OH$,

$N(CH_2CH_2OH)_2$ oder

H
$N-CH_2COOH$,

$R^3 =$ H, OH, $NH_2$,

H
$N-CH_2CH_2OH$,

$N(CH_2CH_2OH)_2$,

H
$N-CH_2-COOH$

H
$N-C_6H_5$ oder
H
$N-CO-NH_2$,

$R^4 =$ H, $CH_3$, $C_2H_5$, $OCH_3$, $OC_2H_5$, $O-CH_2CH_2-OCH_3$ oder $SO_3H$ bedeuten.
Ganz besonders bevorzugte Trisazofarbstoffe weisen die Formel

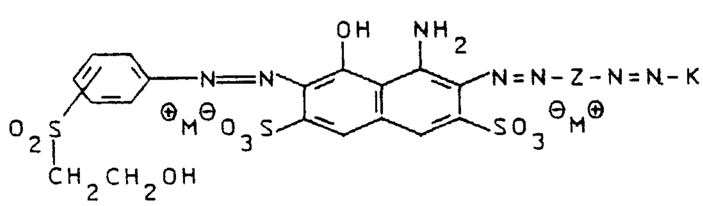

auf, worin Z und K die bereits genannten Bedeutungen besitzen und die wasserlöslich machenden Sulfogruppen in Form der Lithium-und/oder Natrium- und/oder Ammoniumsalze vorliegen. Bevorzugte Ammoniumsalze sind insbesondere $C_1$-$C_4$-Alkanolammoniumsalze. Besonders bevorzugt sind solche Trisazofarbstoffe, die zwei oder mehrere bevorzugte Merkmale aufweisen.
Die Herstellung von Trisazofarbstoffen der Formel

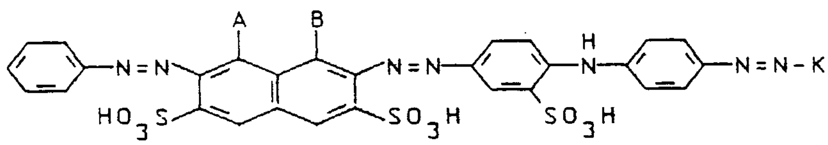

worin A und B = OH oder $NH_2$ und A ≠ B und K den Rest einer Kupplungskomponente darstellt, ist beispielsweise in folgenden Patentschriften beschrieben:
DE-C-943 662, DE-C-10 46 221, DE-A-22 54 835, DE-B-31 34 063.
Analog hierzu werden die erfindungsgemäßen Trisazofarbstoffe unter Verwendung von 2-Hydroxyethylsulfonyl-anilin-Derivaten der Formel IV

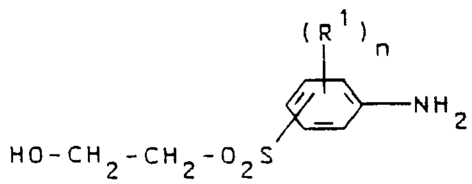

(IV)

anstelle von Anilin durch Umsetzung von diazotierten Disazofarbstoffen der Formel V

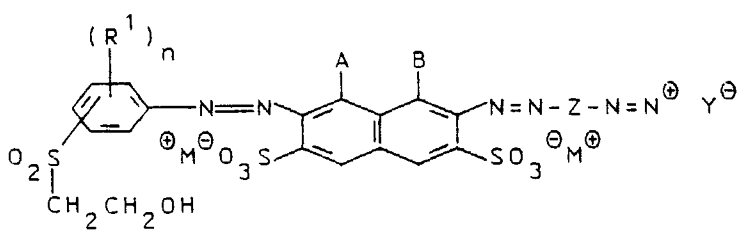

(V)

worin $R^1$, A, B, $M^{\oplus}$ die bereits genannte Bedeutung besitzen und $Y^{\ominus}$ für das Anion einer Mineralsäure steht, mit Kupplungskomponenten der Formel III

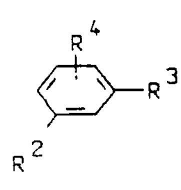

erhalten.
Ein weiteres Verfahren zur Herstellung der erfindungsgemäßen Trisazofarbstoffe besteht darin, daß man Disazofarbstoffe der Formel VI

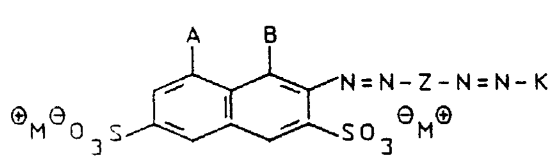

(VI)

worin A = OH, B = $NH_2$ und Z, K sowie $M^{\oplus}$ die oben angegebene Bedeutung haben, mit Diazonium-Salzen der Formel VII

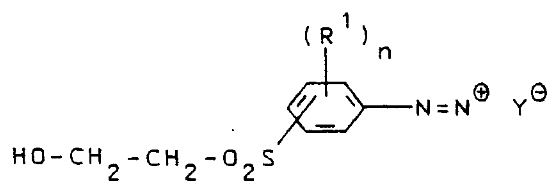

(VII)

oder Monoazofarbstoffe der Formel VIII

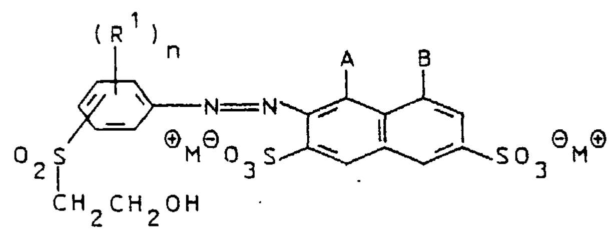

(VIII)

worin A = $NH_2$ und B = OH ist mit diazotierten Monoazofarbstoffen dem Formel IX

$Y^{\ominus}\ {}^{\oplus}N=N\text{-}Z\text{-}N=N\text{-}K$ (IX)

umsetzt.

Als Diazokomponenten der Formel IV können beispielsweise eingesetzt werden:
3-(2'-Hydroxyethylsulfonyl)-anilin,
4-(2'-Hydroxyethylsulfonyl)-anilin,
2,5-Dimethoxy-4(2'-hydroxyethylsulfonyl)-anilin,
4-(2'-Hydroxyethylsulfonyl)-2-methoxy-5-methylanilin,
4-(2'-Hydroxyethylsulfonyl)-2,6-dichloranilin,
3-(2'-Hydroxyethylsulfonyl)-4-hydroxyanilin,
3-(2'-Hydroxyethylsulfonyl)-4-carboxyanilin,
3-(2'-Hydroxyethylsulfonyl)-4-chloranilin.

Anstelle der Diazokomponenten der Formel IV können auch deren Schwefelsäureester der Formel X

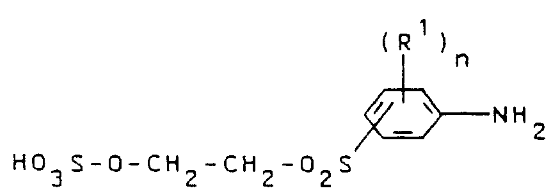

(X)

eingesetzt werden, wobei die Hydrolyse der Estergruppierung der Formel X zu Diazokomponenten der Formel IV vor der Diazotierungsreaktion durch alkalische Verseifung, vorzugsweise bei pH-Werten von 8-12 und Temperaturen von 50-100 °C, oder nach der Kupplungsreaktion durch alkalische Verseifung der zunächst gebildeten Farbstoffe erfolgen kann.

Als Kupplungskomponenten der Formel III können bei der Herstellung der erfindungsgemäßen Farbstoffe beispielsweise eingesetzt werden:
Phenol, 1,3-Diaminobenzol, 1,3-Diaminobenzol-4-sulfonsäure, 1,3-Diamino-4-methylbenzol, 1,3-Diamino-4-methoxybenzol, 1,3-Diamino-4-ethoxybenzol, 1,3-Diamino-4-(2'-methoxyethoxy)-benzol, 3-Aminophenylharnstoff, 1-Amino-3-(2-hydroxyethylamino)-benzol, 1-Amino-3-carboxymethylamino-benzol, 3-Aminophenol, 3-(2-Hydroxyethylamino)-phenol, 3-(Carboxymethylamino)-phenol, 3-Phenylamino-phenol, 3-Aminophenol-4-sulfonsäure, 1,3-Dihydroxybenzol. Die erfindungsgemäßen Farbstoffe eignen sich hervorragend zum Färben von natürlichen und synthetischen Fasermaterialien wie Baumwolle, Regeneratcellulose, Papier, Polyamid,

Wolle und insbesondere zum Färben von Leder. Gegenüber nächstvergleichbaren Farbstoffen, beispielsweise den in den Patentschriften DE-C-943 662, DE-C-10 46 221 und DE-C-35 29 495 beschriebenen Farbstoffen, weisen die erfindungsgemäßen Trisazofarbstoffe überraschende Vorteile auf, insbesondere in der Lichtechtheit auf Polyamid oder Leder sowie in der Farbstärke auf Leder, was in Anbetracht der strukturellen Ähnlichkeit nicht vorhergesehen werden konnte. Weiterhin eignen sich die erfindungsgemässen Farbstoffe hervorragend zur Herstellung von Schreibtinten und Aufzeichnungsflüssigkeiten. Den Aufzeichnungsflüssigkeiten können an sich bekannte, beispielsweise in der EP 324 943 beschriebene Lösungsmittel bzw. Feuchthaltemittel, Konservierungsmittel oder Amine zugesetzt werden. Die einen oder mehrere erfindungsgemäße Farbstoffe enthaltenden Aufzeichnungsflüssigkeiten eignen sich insbesondere für das Tintenstrahl-Druckverfahren. Es werden dabei schwarze Drucke von hoher Qualität erhalten, die eine sehr gute Schärfe und Brillanz sowie gute Wasser-, Licht- und Abriebfestigkeit besitzen. Die erfindungsgemäßen Farbstoffe sind ferner aus toxikologischen Gründen vorteilhaft. Bei der Lagerung erfindungsgemäßer Tinten tritt keine Abscheidung von Kristallen ein, die zu einem Verstopfen von Düsen führen kann. Gegenüber nächstvergleichbaren, in der DE-PS 35-29 495 beschriebenen Trisazofarbstoffen weisen die erfindungsgemäßen Farbstoffe als salzfreie Farbstoffe für das Tintenstrahl-Druckverfahren eine bis zu 40 % höhere Wasserlöslichkeit sowie eine bessere Wasserechtheit auf Papier auf. Aufzeichnungsflüssigkeiten aus den erfindungsgemäßen Farbstoffen zeichnen sich darüber hinaus durch eine bessere Lagerstabilität und überraschenderweise durch eine höhere Oberflächenspannung aus.

Die erfindungsgemäßen Farbstoffe können nach der Kupplungsreaktion durch Zusatz von Mineralsäuren in Form der freien Säure der Formel

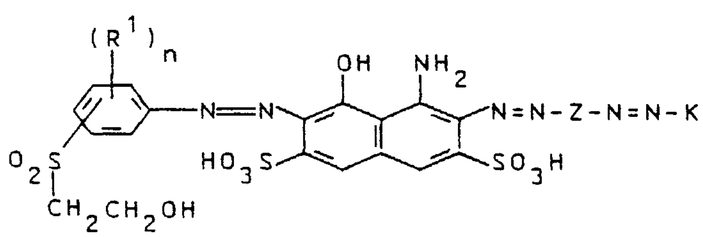

isoliert werden, wobei die abgetrennte Farbsäure zur Entfernung der Salze mit Wasser oder angesäuertem Wasser nachgewaschen wird. Die salzarme Farbsäure wird dann in wäßrigem Medium mit Alkalihydroxiden und/oder Alkalicarbonaten wie LiOH, $Li_2CO_3$, NaOH, $Na_2CO_3$, KOH, $K_2CO_3$ oder mit Aminen neutralisiert.

Geeignete Amine sind beispielsweise: Ammoniak, Ethanolamin, Di-ethanolamin, Tri-ethanolamin, N-Methyl-N-ethanolamin, N-Methyl-N-di-ethanolamin, 2-(2-hydroxy-ethoxy)-ethanamin, Di-2-(2-hydroxy-ethoxy)-ethanamin, Tri-2-(2-hydroxy-ethoxy)-ethanamin.

Zu den folgenden Beispielen bedeuten Prozente Gew.%, die Temperaturen sind in Celsiusgraden angegeben.

Beispiel 1

27,9 g 4,4'-Diaminodiphenylamin-2-sulfonsäure werden in einem Gemisch aus 200 g Wasser und 50 g 30%iger Salzsäure unter Zugabe von Eis bei 0-5° mit einer Lösung von 13,8 g Natriumnitrit in 50 g Wasser zweifach diazotiert. Nach Zugabe der Natriumnitritlösung rührt man ca. 1 1/2 h bei 0-5° nach und beseitigt dann überschüssige salpetrige Säure mit Amidosulfonsaure.

Dann werden 30 g 1-Amino-8-hydroxynaphthalin-3,6-disulfonsäure in 100 g Wasser und 30%iger Natronlauge so gelöst, daß die Lösung einen pH-Wert von 6,5 bis 6,7 aufweist. Die neutrale Lösung der 1-Amino-8-hydroxy-naphthalin-3,6-disulfonsäure wird darauf langsam zu der mit Natriumacetat auf pH:2 abgestumpften Lösung der Tetrazokomponente getropft und die halbseitige Kupplung durch Rühren bei 10-15° vervollständigt.

Der mit Eis auf 0-5° gekühlten Suspension des diazotierten Monoazofarbstoffs wird anschließend eine aus 19,1 g 3-(2-Hydroxyethyl-sulfonyl)-anilin, 30 g 30%iger Salzsäure und einer Lösung von 6,7 g Natriumnitrit in 40 g Wasser bei 0° hergestellte 3-(2-Hydroxyethyl-sulfonyl)-diazobenzol-Lösung zugesetzt und mit 10%iger Natriumcarbonatlösung ein pH-Wert von 8,5 bis 9 eingestellt.

Zu der erhaltenen Suspension des blaugrünen diazotierten Disazofarbstoffs wird darauf eine Lösung von 10,5 g 3-Aminophenol in 120 g Wasser gegeben. Die Kupplung ist nach ca. einstündigem Nachrühren bei 15-20° beendet.

Die Abscheidung erfolgt durch Zugabe von 38%iger Schwefelsäure bis zu einem pH-Wert von 2. Die

erhaltene Farbsäure wird mit 1 kg 0,25 m Schwefelsäure gewaschen, in 1 l Wasser angerührt und mit 50,5 g 10 N Natronlauge neutralisiert.
Nach Trocknen der erhaltenen Farbstofflösung erhält man ein Gemisch der Farbstoffe der Formel

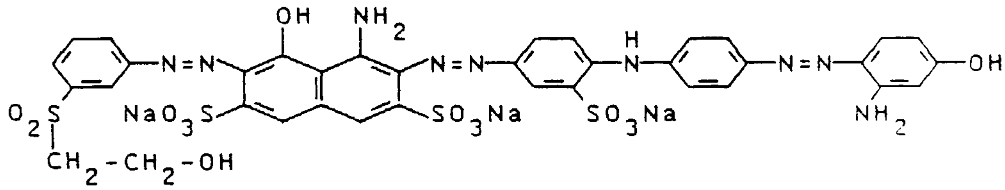

und

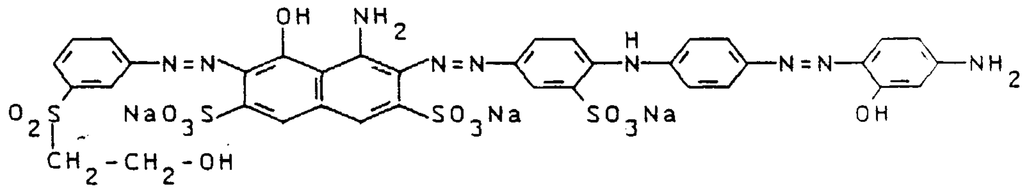

in Form eines schwarzen, elektrolytarmen Pulvers.
Ausbeute: 104,2 g ($\lambda max_1$: 623 nm, $\lambda max_2$: 484 nm)

Vergleichsbeispiel:

Verfährt man nach den Angaben des Beispiels 1, setzt jedoch anstelle von 19,1 g 3-(2-Hydroxyethylsulfonyl)-anilin 8,8 g Anilin ein, so erhält man ein Gemisch der Farbstoffe der Formel

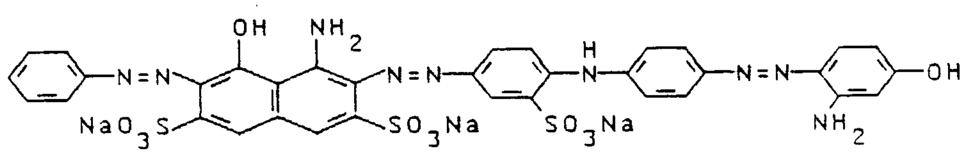

und

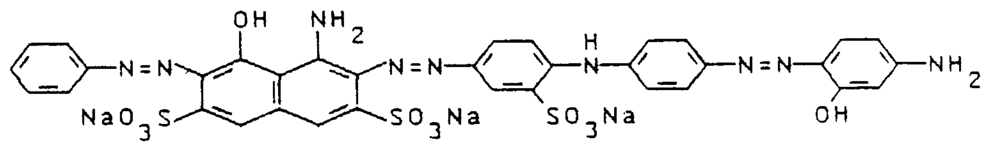

in einer Ausbeute von 90 g in Form eines schwarzen
Kristallpulvers: ($\lambda max_1$: 623 nm, $\lambda max_2$: 485 nm)

Überraschenderweise weist der nach Beispiel 1 erhaltene Farbstoff gegenüber dem Vergleichsbeispiel bei Färbungen auf Polyamid oder Leder eine deutlich verbesserte Lichtechtheit auf, sowie eine um 40 % verbesserte Wasserlöslichkeit und bei Papiertauchfärbungen eine deutlich verbesserte Ausblutechtheit. Färbungen auf Leder zeichnen sich darüber hinaus durch eine deutlich verbesserte Farbstärke aus.

Der Tabelle I ist der strukturelle Aufbau weiterer, entsprechend dem Beispiel 1 hergestellter Farbstoffe der Formel I zu entnehmen, wobei angegeben ist:

in Spalte 1: Die benutzte Diazokomponente der Formel IV

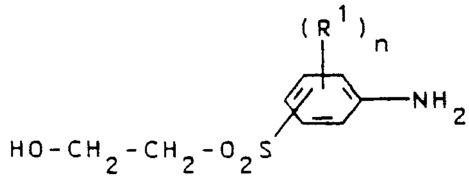

in Spalte 2: Die benutzte Kupplungskomponente der Formel III

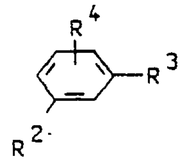

in Spalte 3: Das eingesetzte Kation $M^{\oplus}$

in Spalte 4: Der Farbton des Farbstoffs auf Leder.

| Beispiel | Diazokomponente der Formel IV | Kupplungskomponente der Formel III | Kation $M^{\oplus}$ | Farbton auf Leder |
|---|---|---|---|---|
| 2 | 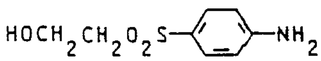 | 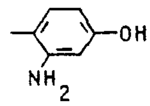 | 3 $Na^{\oplus}$ | schwarz |
| 3 | 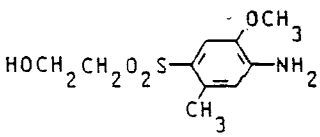 | 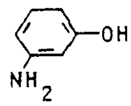 | 3 $Li^{\oplus}$ | schwarz |
| 4 | 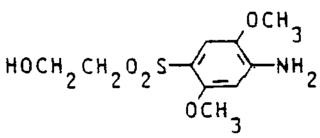 | 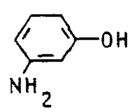 | 3 $Li^{\oplus}$ | schwarz |
| 5 | 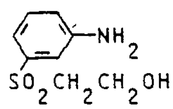 | 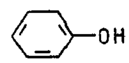 | 3 $Na^{\oplus}$ | grün |
| 6 | 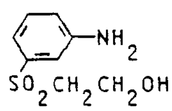 | 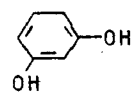 | 3 $Na^{\oplus}$ | schwarz-grün |
| 7 | 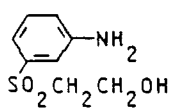 | 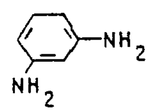 | 3 $Na^{\oplus}$ | schwarz |
| 8 | 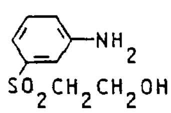 | 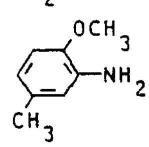 | 3 $Na^{\oplus}$ | schwarz |
| 9 | 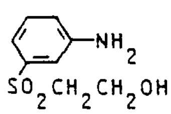 | 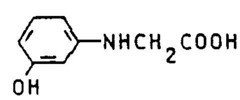 | 3 $Na^{\oplus}$ | schwarz |
| 10 | 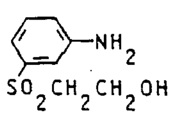 | 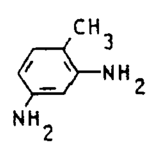 | 3 $H_2\overset{\oplus}{N}(CH_2CH_2OH)_2$ | schwarz |
| 11 | 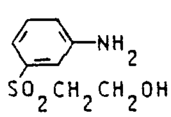 | 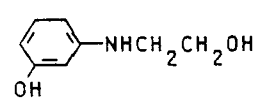 | 3 $H\overset{\oplus}{N}(CH_2CH_2OH)_3$ | schwarz |

| Beispiel | Diazokomponente der Formel IV | Kupplungskomponente der Formel III | Kation $M^{\oplus}$ | Farbton auf Leder |
|---|---|---|---|---|
| 12 | 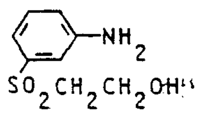 | 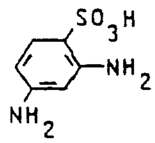 | 3 $Na^{\oplus}$ | schwarz |
| 13 | 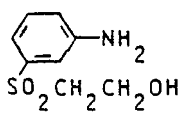 | 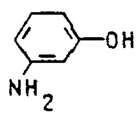 | 3 $Li^{\oplus}$ | schwarz |
| 14 | 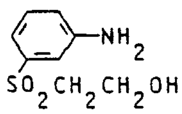 | 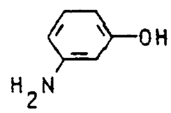 | 1 $Li^{\oplus}$, 2 $Na^{\oplus}$ | schwarz |

Beispiel 15

Zu einer aus 20,1 g 4-(2-Hydroxyethyl-sulfonyl)-anilin, 30 g 30%iger wäßriger Salzsäure und einer Lösung von 7,6 g Natriumnitrit in 30 g Wasser bei 0-5° hergestellten Lösung von 4-(2-Hydroxyethylsulfonyl)-benzoldiazoniumchlorid gibt man eine mit Natriumcarbonat auf pH:6 eingestellte Lösung von 31,9 g 1-Amino-8-hydroxy-naphthalin-3,6-disulfonsäure in 100 g Wasser.
Nach beendeter Kupplung wird zu der Suspension des roten Monoazofarbstoffs eine Bis-diazoniumsalz-Lösung gegeben, die durch Tetrazotierung von 27,9 g 4,4'-Diaminodiphenylamin-2-sulfonsäure mit 13,8 g Natriumnitrit in einem Gemisch von 50 g 32%iger Salzsäure, 200 g Wasser unter Zugabe von Eis bei 0-5° erhalten wurde.
Anschließend stellt man im Verlauf von 30 Min. mit einer auf 5° gekühlten 10%igen Natriumcarbonat-Lösung einen pH-Wert von 7,5 ein. Die halbseitige Kupplung ist nach 15 Min. beendet, worauf man die Mischung mit einer Lösung von 10,9 g 3-Aminophenol in 150 g Wasser versetzt.
Man läßt 3 Stunden nachrühren, versetzt mit 25%iger Schwefelsäure bis zu einem pH-Wert von 1,5 und isoliert die ausgefallene Farbsäure durch Filtration.
Man wäscht mit 0,5 m Schwefelsäure nach, trägt den feuchten Filterkuchen in 1,2 l Wasser ein und neutralisiert die saure Produktsuspension mit 5 N Lithiumhydroxid-Lösung.
Nach Trocknen der erhaltenen Farbstofflösung erhält man ein Gemisch der Farbstoffe der Formel

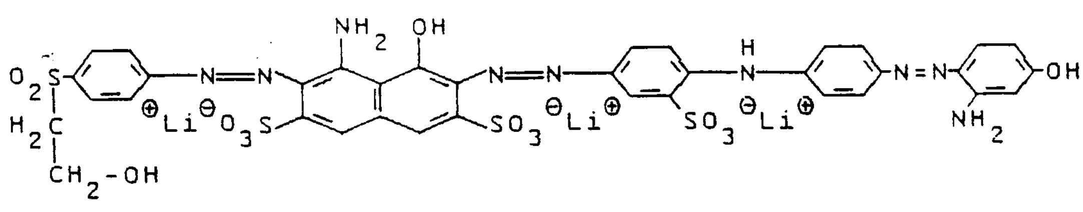

und

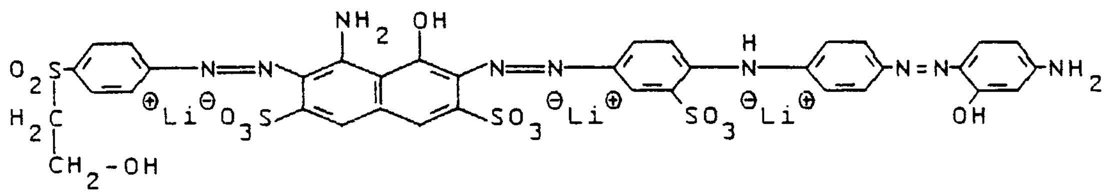

Ausbeute: 120,3 g schwarzes Pulver
($\lambda max_1$: 620 nm,
$\lambda max_2$: 481 nm)

In Tabelle II sind weitere schwarze Trisazofarbstoffe der allgemeinen Formel I aufgeführt, die nach den Angaben des Beispiels 15 erhalten werden können.

| Beispiel | Diazokomponente der Formel IV | Kupplungskomponente der Formel III | Kation $M^{\oplus}$ | Farbton auf Leder |
|---|---|---|---|---|
| 14 | 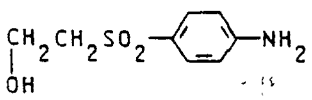 | 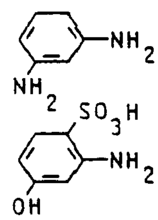 | 3 $Na^{\oplus}$ | schwarz |
| 15 | 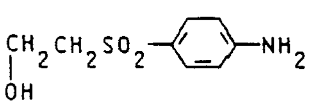 | | 3 $Na^{\oplus}$ | schwarz |
| 16 | 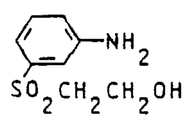 | 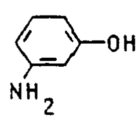 | 3 $Na^{\oplus}$ | schwarz |

## Patentansprüche

## Patentansprüche für folgende Vertragsstaaten : CH, DE, FR, GB, IT, LI

**1.** Wasserlösliche Trisazofarbstoffe der Formel I

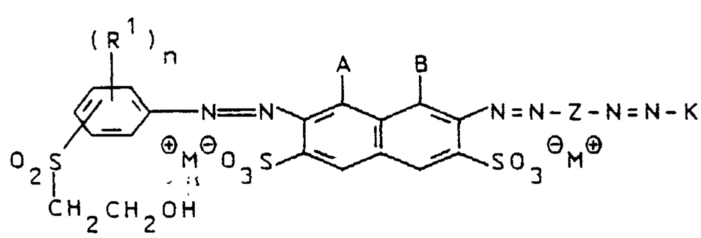

(I)

worin
$R^1$ Wasserstoff, Alkyl mit 1-2 C-Atomen, Alkoxy mit 1-2 C-Atomen, Hydroxy, Halogen, Carboxy, bedeutet, n 1 oder 2,
A und B für Hydroxy- oder Aminogruppen stehen, wobei A ungleich B ist,
Z den Rest eines aromatischen Diamins der Formel II

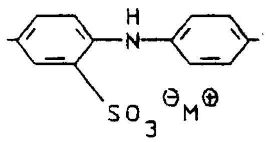

(II)

bedeutet und K für den Rest einer Kupplungskomponente der Formel III

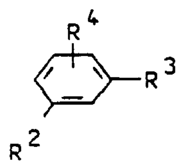

(III)

steht, worin

$R^2$ eine Hydroxy- oder gegebenenfalls durch $CH_2COOH$ oder $CH_2CH_2OH$ substituierte Aminogruppe,

$R^3$ Wasserstoff, Hydroxy oder eine gegebenenfalls durch $CH_2COOH$, $CH_2CH_2OH$, $-CONH_2$ oder Phenyl substituierte Aminogruppe,

$R^4$ Wasserstoff, Alkyl mit 1-2 C-Atomen, gegebenenfalls durch Methoxy oder Ethoxy substituiertes Alkoxy mit 1-2 C-Atomen oder $SO_3H$ bedeuten und

$M^{\oplus}$ ein Kation oder ein Gemisch verschiedener Kationen aus der Reihe Lithium, Natrium, Kalium oder ein gegebenenfalls durch $CH_2CH_2OH$ ein- oder mehrfach substituiertes Ammoniumkation darstellt.

**2.** Wasserlösliche Trisazofarbstoffe nach Anspruch 1, dadurch gekennzeichnet, daß $R^1$ Wasserstoff bedeutet.

**3.** Wasserlösliche Trisazofarbstoffe nach den Ansprüchen 1 und 2, dadurch gekennzeichnet, daß

$R^2$ = OH, $NH_2$,

$$\overset{H}{N}-CH_2CH_2OH,$$

$N(CH_2CH_2OH)_2$ oder

$$-\overset{H}{N}-CH_2COOH,$$

$R^3$ = H, OH, $NH_2$,

$$\overset{H}{N}-CH_2CH_2OH,$$

$N(CH_2CH_2OH)_2$,

$$\overset{H}{N}-CH_2COOH,$$

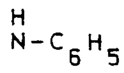 oder 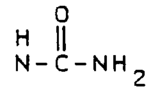

$R^4$ = H, $CH_3$, $C_2H_5$, $OCH_3$, $OC_2H_5$, $O\text{-}CH_2CH_2\text{-}OCH_3$ oder $SO_3H$
bedeuten.

**4.** Wasserlösliche Trisazofarbstoffe nach den Ansprüchen 1 bis 3, dadurch gekennzeichnet, daß A = OH und B = $NH_2$ bedeutet.

**5.** Wasserlösliche Trisazofarbstoffe nach den Ansprüchen 1 bis 4, dadurch gekennzeichnet, daß $M^{\oplus}$ = $Li^{\oplus}$ und/oder $Na^{\oplus}$ und/oder

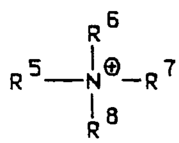

worin $R^5$, $R^6$, $R^7$ und $R^8$ Wasserstoff oder Alkylgruppen mit 1-4 C-Atomen sind, die durch Hydroxy oder $\text{-}OCH_2CH_2OH$ substituiert sein können.

**6.** Verfahren zur Herstellung von Trisazofarbstoffen der Formel I, dadurch gekennzeichnet, daß diazotierte Disazofarbstoffe der Formel V

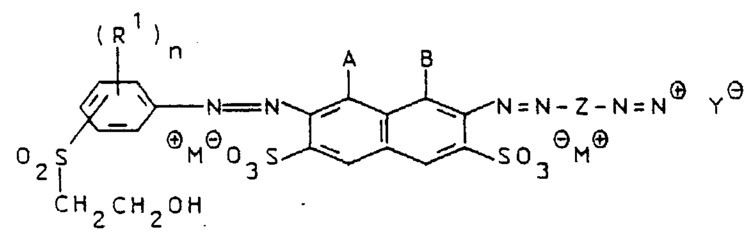 (V)

worin $Y^{\ominus}$ das Anion einer Mineralsäure darstellt, mit Kupplungskomponenten der Formel III

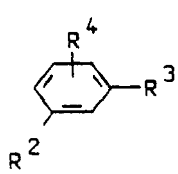 (III)

gekuppelt werden.

**7.** Verfahren zur Herstellung von Trisazofarbstoffen der Formel I, dadurch gekennzeichnet, daß Disazofarbstoffe der Formel VI

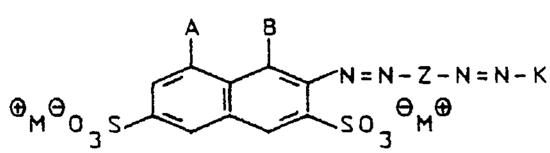 (VI)

worin A = OH und B = $NH_2$ sind, mit Diazoniumsalzen der Formel VII

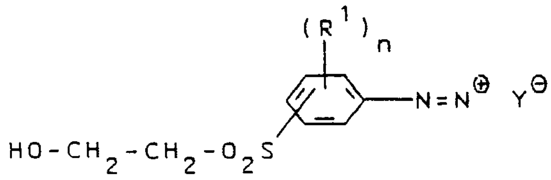

(VII)

gekuppelt werden.

**8.** Verfahren zur Herstellung von Trisazofarbstoffen der Formel I, dadurch gekennzeichnet, daß Monoazofarbstoffe der Formel VIII

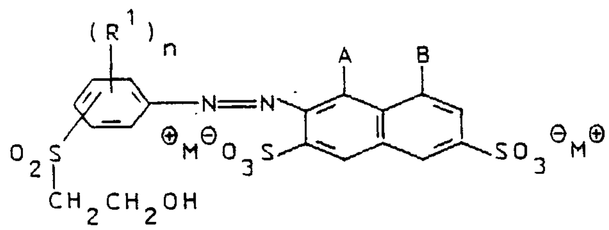

(VIII)

worin A = $NH_2$ und B = OH sind, mit diazotierten Monoazofarbstoffen der Formel IX

$Y^{\ominus}\ {}^{\oplus}N=N\text{-}Z\text{-}N=N\text{-}K$ (IX)

gekuppelt werden.

**9.** Verwendung der in einem oder mehreren der Ansprüche 1 bis 5 angegebenen wasserlöslichen Trisazofarbstoffe zum Färben von natürlichen und synthetischen Fasermaterialien, insbesondere zum Färben von Leder und zur Herstellung von Schreibtinten und Aufzeichnungsflüssigkeiten für das Tintenstrahl-Druckverfahren.

**Patentansprüche für folgenden Vertragsstaat : ES**

**1.** Verfahren zur Herstellung wasserlösliche Trisazofarbstoffe der Formel I

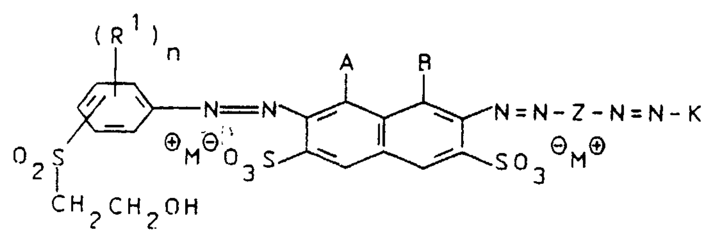

(I)

worin
$R^1$ Wasserstoff, Alkyl mit 1-2 C-Atomen, Alkoxy mit 1-2 C-Atomen, Hydroxy, Halogen, Carboxy, bedeutet,
n 1 oder 2,
A und B für Hydroxy- oder Aminogruppen stehen, wobei A ungleich B ist,
Z den Rest eines aromatischen Diamins der Formel II

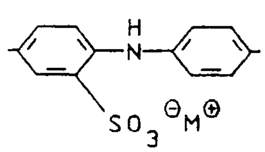

(II)

bedeutet und K für den Rest einer Kupplungskomponente der Formel III

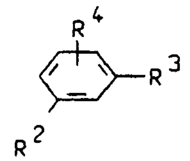

(III)

steht, worin
$R^2$ eine Hydroxy- oder gegebenenfalls durch $CH_2COOH$ oder $CH_2CH_2OH$ substituierte Aminogruppe,
$R^3$ Wasserstoff, Hydroxy oder eine gegebenenfalls durch $CH_2COOH$, $CH_2CH_2OH$, $-CONH_2$ oder Phenyl substituierte Aminogruppe,
$R^4$ Wasserstoff, Alkyl mit 1-2 C-Atomen, gegebenenfalls durch Methoxy oder Ethoxy substituiertes Alkoxy mit 1-2 C-Atomen oder $SO_3H$ bedeuten und
$M^{\oplus}$ ein Kation oder ein Gemisch verschiedener Kationen aus der Reihe Lithium, Natrium, Kalium oder ein gegebenenfalls durch $CH_2CH_2OH$ ein- oder mehrfach substituiertes Ammoniumkation darstellt, dadurch gekennzeichnet, daß diazotierte Disazofarbstoffe der Formel V

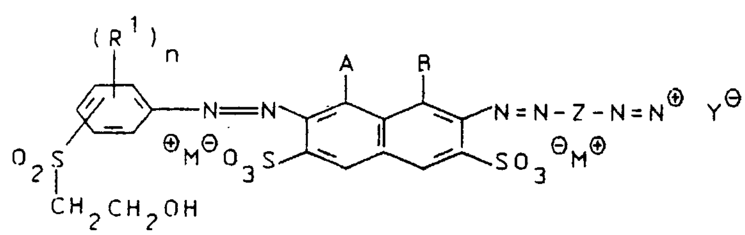

(V)

worin $Y^{\ominus}$ das Anion einer Mineralsäure darstellt, mit Kupplungskomponenten der Formel III

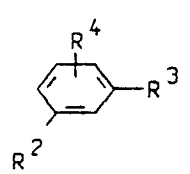

(III)

gekuppelt werden.

**2.** Verfahren zur Herstellung von Trisazofarbstoffen der Formel I, dadurch gekennzeichnet, daß Disazofarbstoffe der Formel VI

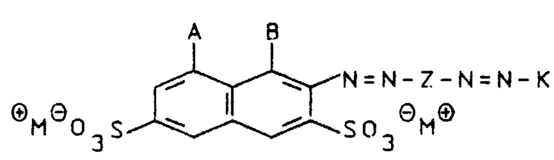

(VI)

worin A = OH und B = $NH_2$ sind, mit Diazoniumsalzen der Formel VII

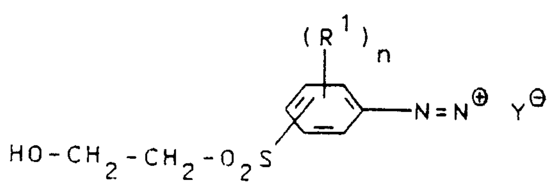

(VII)

gekuppelt werden.

3. Verfahren zur Herstellung von Trisazofarbstoffen der Formel I, dadurch gekennzeichnet, daß Monoazofarbstoffe der Formel VIII

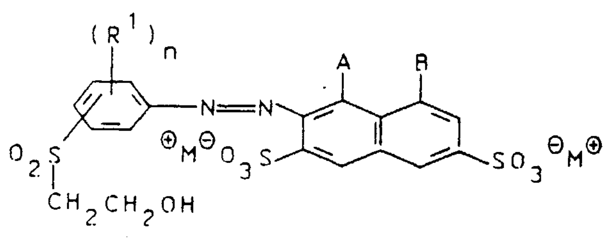

(VIII)

worin A = $NH_2$ und B = OH sind, mit diazotierten Monoazofarbstoffen der Formel IX

$Y^{\ominus}\ {}^{\oplus}N=N\text{-}Z\text{-}N=N\text{-}K$ (IX)

gekuppelt werden.

4. Verfahren gemäß einem oder mehreren der Ansprüche 1 bis 3, dadurch gekennzeichnet, daß $R^1$ Wasserstoff bedeutet.

5. Verfahren gemäß einem oder mehreren der Ansprüche 1 bis 4, dadurch gekennzeichnet, daß

$R^2$ = OH, $NH_2$,

$\overset{H}{N}-CH_2CH_2OH$,

$N(CH_2CH_2OH)_2$ oder

$-\overset{H}{N}-CH_2COOH$,

$R^3$ = H, OH, $NH_2$,

$\overset{H}{N}-CH_2CH_2OH$,

$N(CH_2CH_2OH)_2$,

$\overset{H}{N}-CH_2COOH$,

$\overset{H}{N}-C_6H_5$ oder $\overset{H}{N}-\overset{\overset{O}{\|}}{C}-NH_2$

$R^4$ = H, $CH_3$, $C_2H_5$, $OCH_3$, $OC_2H_5$, $O\text{-}CH_2CH_2\text{-}OCH_3$ oder $SO_3H$

bedeuten.

6. Verfahren gemäß einem oder mehreren der Ansprüche 1 bis 5, dadurch gekennzeichnet, daß A = OH und B = $NH_2$ bedeuten.

7. Verfahren gemäß einem oder mehreren der Ansprüche 1 bis 6, dadurch gekennzeichnet, daß $M^{\oplus}$ = $Li^{\oplus}$ und/oder $Na^{\oplus}$ und/oder

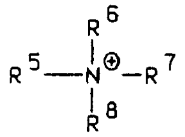

worin $R^5$, $R^6$, $R^7$ und $R^8$ Wasserstoff oder Alkylgruppen mit 1-4 C-Atomen sind, die durch Hydroxy oder $-OCH_2CH_2OH$ substituiert sein können.

8. Verwendung der nach einem oder mehreren der Ansprüche 1 bis 7 hergestellten wasserlöslichen Trisazofarbstoffe zum Färben von natürlichen und synthetischen Fasermaterialien, insbesondere zum Färben von Leder und zur Herstellung von Schreibtinten und Aufzeichnungsflüssigkeiten für das Tintenstrahl-Druckverfahren.

**Claims**
**Claims for the following Contracting States : CH, DE, FR, GB, IT, LI**

1. Water-soluble trisazo dyes of the formula I

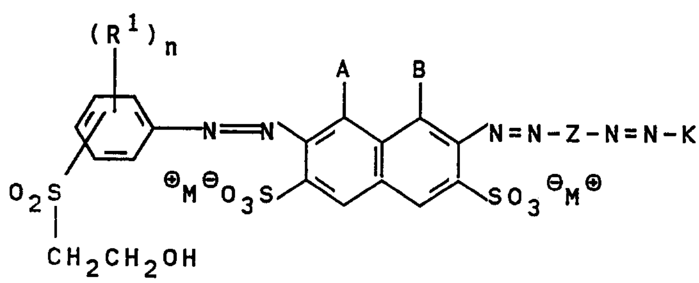

(I)

where
$R^1$ is hydrogen, alkyl of 1-2 carbon atoms, alkoxy of 1-2 carbon atoms, hydroxyl, halogen or carboxyl,
n is 1 or 2,
A and B are each hydroxyl or amino but are not identical to each other,
Z is the radical of an aromatic diamine of the formula II

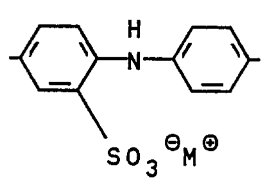

(II)

and K is the radical of a coupling component of the formula III

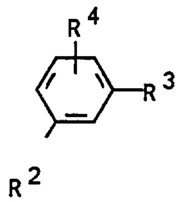

(III)

where
$R^2$ is hydroxyl or unsubstituted or $CH_2COOH$- or $CH_2CH_2OH$-substituted amino,
$R^3$ is hydrogen, hydroxyl or unsubstituted or $CH_2COOH$-, $CH_2CH_2OH$-, $CONH_2$- or phenyl-substituted amino,
$R^4$ is hydrogen, alkyl of 1-2 carbon atoms, unsubstituted or methoxy- or ethoxy-substituted alkoxy of 1-2 carbon atoms or $SO_3H$,
and
$M^{\oplus}$ is a cation or a mixture of different cations selected from the group consisting of lithium, sodium and potassium, or an unsubstituted or $CH_2CH_2OH$-monosubstituted or -polysubstituted ammonium cation.

**2.** Water-soluble trisazo dyes according to Claim 1, characterised in that $R^1$ is hydrogen.

**3.** Water-soluble trisazo dyes according to Claims 1 and 2, characterised in that

$R^2$ = OH, $NH_2$,

$$\overset{H}{N}-CH_2CH_2OH,$$

$N(CH_2CH_2OH)_2$ or

$$-\overset{H}{N}-CH_2COOH,$$

$R^3$ = H, OH, $NH_2$,

$$\overset{H}{N}-CH_2CH_2OH,$$

$N(CH_2CH_2OH)_2$,

$$\overset{H}{N}-CH_2COOH,$$

$$\overset{H}{N}-C_6H_5 \text{ or } \overset{H}{N}-\overset{\overset{O}{\|}}{C}-NH_2$$

$R^4$ = H, $CH_3$, $C_2H_5$, $OCH_3$, $OC_2H_5$, $O-CH_2CH_2-OCH_3$ or $SO_3H$

4. Water-soluble trisazo dyes according to Claims 1 to 3, characterised in that A = OH and B = $NH_2$.

5. Water-soluble trisazo dyes according to Claims 1 to 4, characterised in that $M^{\oplus}$ = $Li^{\oplus}$ and/or $Na^{\oplus}$ and/or

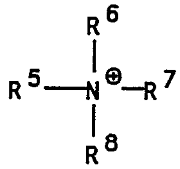

where $R^5$, $R^6$, $R^7$ and $R^8$ are each hydrogen or alkyl of 1-4 carbon atoms which is unsubstituted or substituted by hydroxyl or $-OCH_2CH_2OH$.

6. Process for preparing trisazo dyes of the formula I, characterised in that diazotised disazo dyes of the formula V

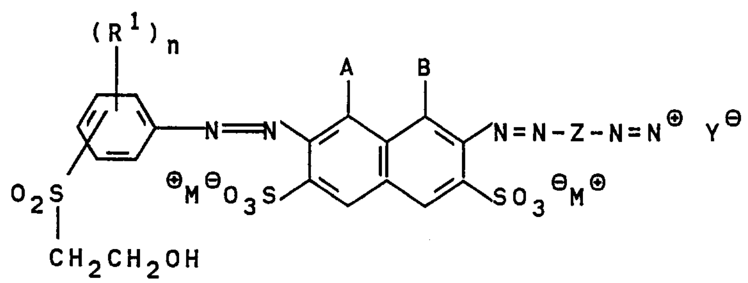

(V)

where $Y^{\ominus}$ is the anion of a mineral acid, are coupled with coupling components of the formula III

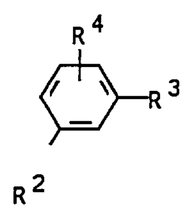

(III)

7. Process for preparing trisazo dyes of the formula I, characterised in that disazo dyes of the formula VI

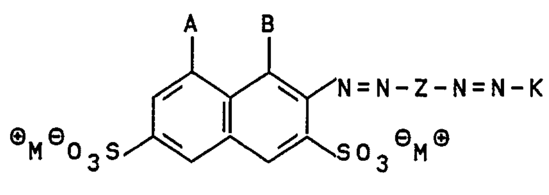

(VI)

where A = OH and B = $NH_2$, are coupled with diazonium salts of the formula VII

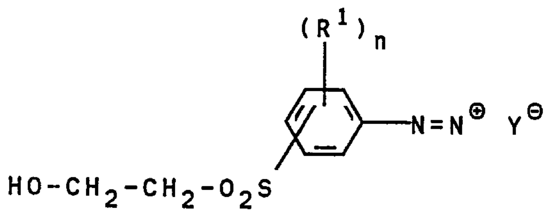

(VII)

8. Process for preparing trisazo dyes of the formula I, characterised in that monoazo dyes of the formula VIII

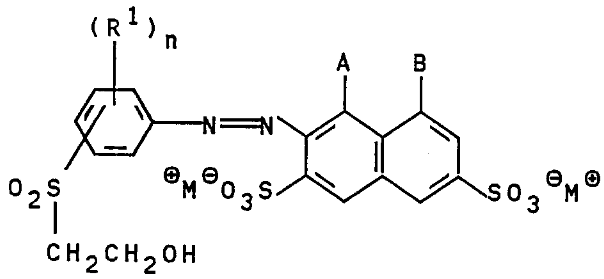

(VIII)

where A = $NH_2$ and B = OH, are coupled with diazotised monoazo dyes of the formula IX

$Y^{\ominus}\ {}^{\oplus}N=N\text{-}Z\text{-}N=N\text{-}K$ (IX)

9. Use of the water-soluble trisazo dyes according to one or several of Claims 1 to 5 for dyeing natural and synthetic fibre materials, in particular for dyeing leather and for preparing writing inks and recording fluids for the ink-jet process.

**Claims for the following Contracting State : ES**

1. Process for the preparation of water-soluble trisazo dyes of the formula I

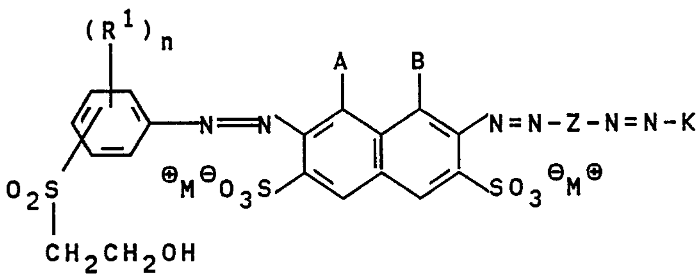

(I)

where
$R^1$ is hydrogen, alkyl of 1-2 carbon atoms, alkoxy of 1-2 carbon atoms, hydroxyl, halogen or carboxyl,
n is 1 or 2,
A and B are each hydroxyl or amino but are not identical to each other,
Z is the radical of an aromatic diamine of the formula II

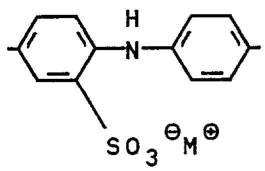

(II)

and K is the radical of a coupling component of the formula III

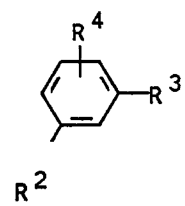

(III)

where
$R^2$ is hydroxyl or unsubstituted or $CH_2COOH$- or $CH_2CH_2OH$-substituted amino,
$R^3$ is hydrogen, hydroxyl or unsubstituted or $CH_2COOH$-, $CH_2CH_2OH$-, $CONH_2$- or phenyl-substituted amino,
$R^4$ is hydrogen, alkyl of 1-2 carbon atoms, unsubstituted or methoxy- or ethoxy-substituted alkoxy of 1-2 carbon atoms or $SO_3H$,
and
$M^{\oplus}$ is a cation or a mixture of different cations selected from the group consisting of lithium, sodium and potassium, or an unsubstituted or $CH_2CH_2OH$-monosubstituted or -polysubstituted ammonium cation, characterised in that diazotised disazo dyes of the formula V

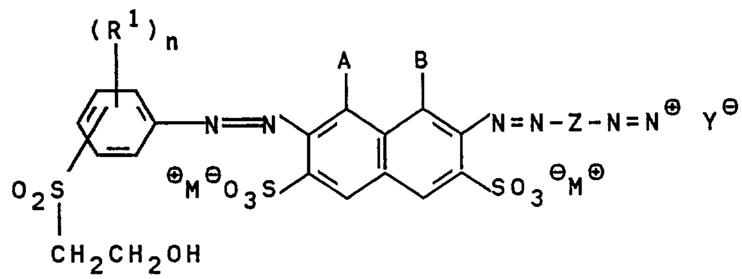

(V)

where $Y^{\ominus}$ is the anion of a mineral acid, are coupled with coupling components of the formula III

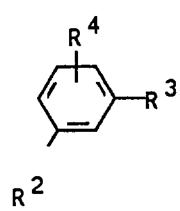

(III)

**2.** Process for preparing trisazo dyes of the formula I, characterised in that disazo dyes of the formula VI

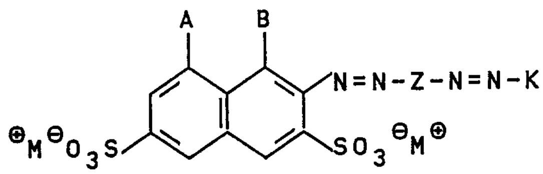

(VI)

where A = OH and B = $NH_2$, are coupled with diazonium salts of the formula VII

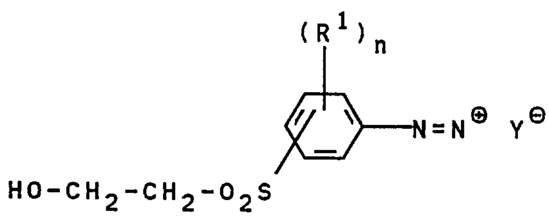

(VII)

**3.** Process for preparing trisazo dyes of the formula I, characterised in that monoazo dyes of the formula VIII

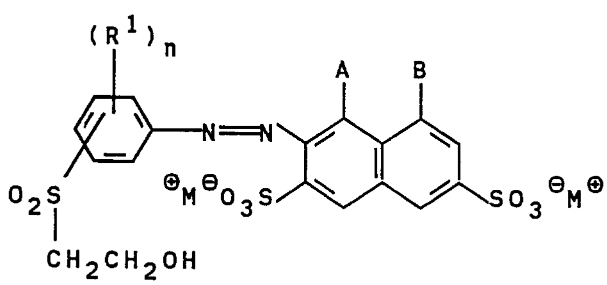

(VIII)

where A = $NH_2$ and B = OH, are coupled with diazotised monoazo dyes of the formula IX

$Y^{\ominus}\ {}^{\oplus}N=N\text{-}Z\text{-}N=N\text{-}K$ (IX)

**4.** Process according to one or more of Claims 1 to 3, characterised in that $R^1$ is hydrogen.

**5.** Process according to one or more of Claims 1 to 4, characterised in that
$R^2$ = OH, $NH_2$,

H
$N-CH_2CH_2OH$,

$N(CH_2CH_2OH)_2$ or

H
$-N-CH_2COOH$,

$R^3$ = H, OH, $NH_2$,

H
$N-CH_2CH_2OH$,

$N(CH_2CH_2OH)_2$,

H
$N-CH_2COOH$,

O
H H ||
$N-C_6H_5$ or $N-C-NH_2$

$R^4$ = H, $CH_3$, $C_2H_5$, $OCH_3$, $OC_2H_5$, $O-CH_2CH_2-OCH_3$ or $SO_3H$

**6.** Process according to one or more of Claims 1 to 5, characterised in that A = OH and B = $NH_2$.

**7.** Process according to one or more of Claims 1 to 6, characterised in that $M^{\oplus}$ = $Li^{\oplus}$ and/or $Na^{\oplus}$ and/or

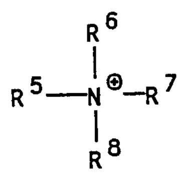

where $R^5$, $R^6$, $R^7$ and $R^8$ are each hydrogen or alkyl of 1-4 carbon atoms which is unsubstituted or substituted by hydroxyl or $-OCH_2CH_2OH$.

**8.** Use of the water-soluble trisazo dyes prepared according to one or several of Claims 1 to 7 for dyeing natural and synthetic fibre materials, in particular for dyeing leather and for preparing writing inks and recording fluids for the ink-jet process.

**Revendications**
**Revendications pour les Etats contractants suivants : CH, DE, FR, GB, IT, LI**

**1.** Colorants trisazoïques hydrosolubles de formule I

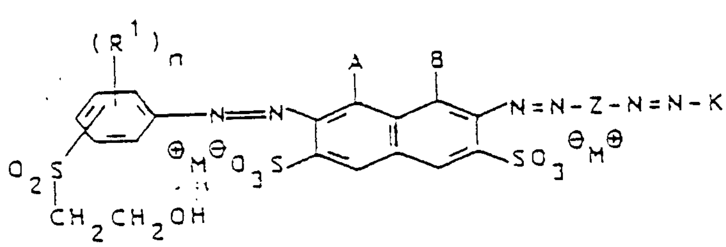

(I)

dans laquelle
$R^1$ désigne l'hydrogène, un alkyle ou un alcoxy à 1 ou 2 atomes de carbone chacun, un hydroxyle, un halogène ou un groupe carboxy,
n le nombre 1 ou 2,

A et B sont des groupes hydroxy ou amino, mais A étant différent de B,
Z est le radical d'une diamine aromatique de formule II

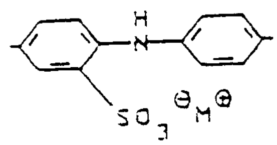

(II)

K le radical d'un composant de copulation de formule III

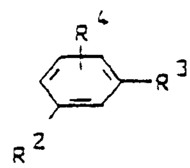

(III)

$R^2$ désignant un hydroxyle ou un groupe amino avec éventuellement comme substituant un groupe $CH_2COOH$ ou $CH_2CH_2OH$,

$R^3$ l'hydrogène, un hydroxyle ou un groupe amino avec éventuellement comme substituant un groupe $CH_2COOH$, $CH_2CH_2OH$, $CONH_2$ ou phényle, et

$R^4$ l'hydrogène, un alkyle à 1 ou 2 atomes de carbone, un alcoxy à 1 ou 2 atomes de carbone avec éventuellement comme substituant un groupe méthoxy ou éthoxy, ou bien le groupe $SO_3H$, et

$M^{\oplus}$ désigne un cation ou plusieurs cations différents pris parmi le lithium, le sodium et le potassium, ou encore un cation ammonium pouvant être éventuellement substitué une ou plusieurs fois par le groupe $CH_2CH_2OH$.

**2.** Colorants trisazoïques hydrosolubles selon la revendication 1, caractérisés en ce que dans ces colorants $R^1$ est l'hydrogène.

**3.** Colorants trisazoïques hydrosolubles selon les revendications 1 et 2, caractérisés en ce que

$R^2$ est un groupe OH, $NH_2$,

H
$N-CH_2CH_2OH$,

$N(CH_2CH_2OH)_2$ ou

H
$-N-CH_2COOH$,

$R^3$ est l'hydrogène ou un groupe OH, $NH_2$,

H
$N-CH_2CH_2OH$,

$N(CH_2CH_2OH)_2$,

$$\overset{H}{N}-CH_2COOH,\ \overset{H}{N}-C_6H_5 \text{ ou } \overset{H}{N}-\overset{O}{C}-NH_2,$$

et

$R^4$ est l'hydrogène ou le groupe $CH_3$, $C_2H_5$, $OCH_3$, $OC_2H_5$, O-$CH_2CH_2$-$OCH_3$ ou $SO_3H$.

**4.** Colorants trisazoïques hydrosolubles selon les revendications 1 à 3, caractérisés en ce que dans ces colorants A = OH et B = $NH_2$.

**5.** Colorants trisazoïques hydrosolubles selon les revendications 1 à 4, caractérisés en ce que $M^{\oplus}$ = $Li^{\oplus}$ et/ou $Na^{\oplus}$ et/ou

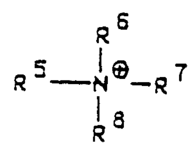

$R^5$, $R^6$, $R^7$ et $R^8$ étant l'hydrogène ou des alkyles avec de 1 à 4 atomes de carbone pouvant avoir comme substituant un hydroxyle ou un groupe -$OCH_2CH_2OH$.

**6.** Procédé de préparation de colorants trisazoïques de formule I selon la revendication 1, procédé caractérisé en ce que l'on copule des colorants disazoïques diazotés de formule V

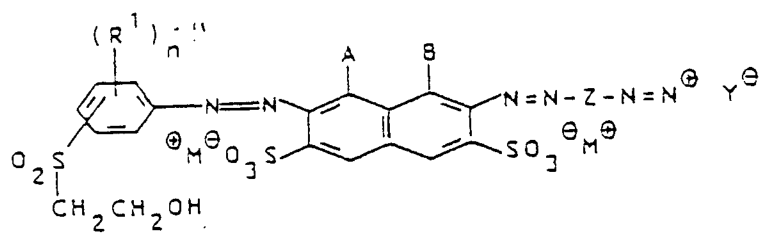

(V)

$Y^{\ominus}$ représentant l'anion d'un acide minéral, avec des composantes de copulation de formule III

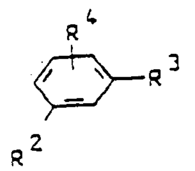

(III)

**7.** Procédé de préparation de colorants trisazoïques de formule I selon la revendication 1, procédé caractérisé en ce que l'on copule des colorants disazoïques de formule VI

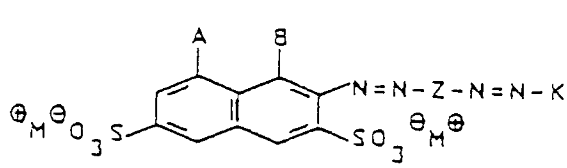

(VI)

dans laquelle A = OH, B = $NH_2$, avec des sels de diazonium de formule VII

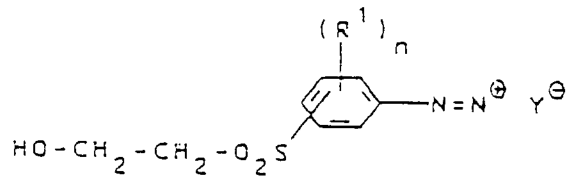

(VII)

**8.** Procédé de préparation de colorants trisazoïques de formule I selon la revendication 1, procédé caractérisé en ce que l'on copule des colorants monoazoïques de formule VIII

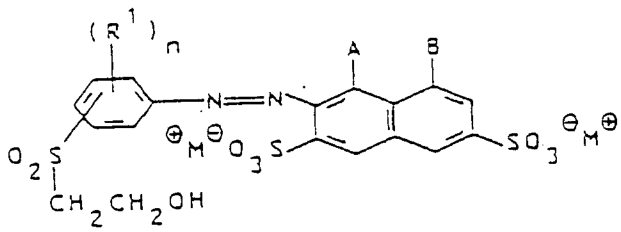

(VIII)

dans laquelle A = $NH_2$ et B = OH, avec des colorants monoazoïques diazotés de formule IX

$Y^{\ominus}\ {}^{\oplus}N=N\text{-}Z\text{-}N=N\text{-}K$ (IX)

**9.** L'emploi des colorants trisazoïques hydrosolubles indiqués à une ou plusieurs des revendications 1 à 5 pour teindre des matières fibreuses naturelles ou synthétiques, en particulier du cuir, ainsi que pour en préparer des encres d'imprimerie et des liquides d'inscription pour le procédé d'impression à jet d'encre.

**Revendications pour l'Etat contractant suivant : ES**

**1.** Procédé de préparation de colorants trisazoïques hydrosolubles de formule I

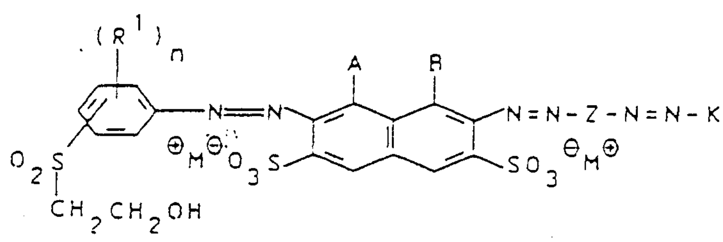

(I)

dans laquelle
$R^1$ désigne l'hydrogène, un alkyle ou un alcoxy à 1 ou 2 atomes de carbone chacun, un hydroxyle, un halogène ou un groupe carboxy,
n le nombre 1 ou 2,
A et B sont des groupes hydroxy ou amino, mais A étant différent de B,
Z est le radical d'une diamine aromatique de formule II

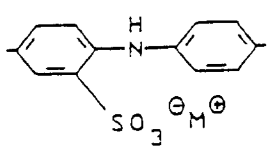

(II)

K le radical d'un composant de copulation de formule III

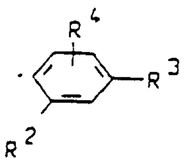

, (III)

$R^2$ désignant un hydroxyle ou un groupe amino avec éventuellement comme substituant un groupe $CH_2COOH$ ou $CH_2CH_2OH$,

$R^3$ l'hydrogène, un hydroxyle ou un groupe amino avec éventuellement comme substituant un groupe $CH_2COOH$, $CH_2CH_2OH$, $CONH_2$ ou phényle, et

$R^4$ l'hydrogène, un alkyle à 1 ou 2 atomes de carbone, un alcoxy à 1 ou 2 atomes de carbone avec éventuellement comme substituant un groupe méthoxy ou éthoxy, ou bien le groupe $SO_3H$, et

$M^{\oplus}$ désigne un cation ou plusieurs cations différents pris parmi le lithium, le sodium et le potassium, ou encore un cation ammonium pouvant être éventuellement substitué une ou plusieurs fois par le groupe $CH_2CH_2OH$,

procédé caractérisé en ce que l'on copule des colorants disazoïques diazotés de formule V

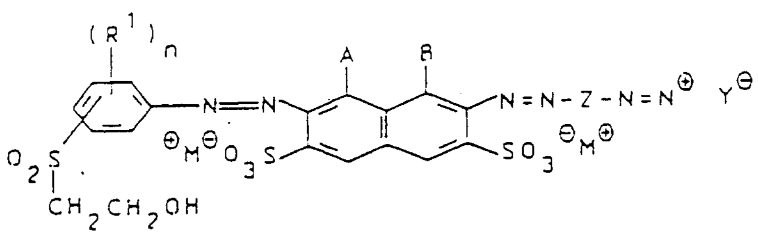

(V)

$Y^{\ominus}$ représentant l'anion d'un acide minéral, avec des composantes de copulation de formule III

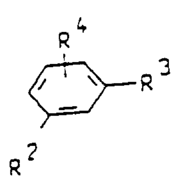

(III)

**2.** Procédé de préparation de colorants trisazoïques de formule I selon la revendication 1, procédé caractérisé en ce que l'on copule des colorants disazoïques de formule VI

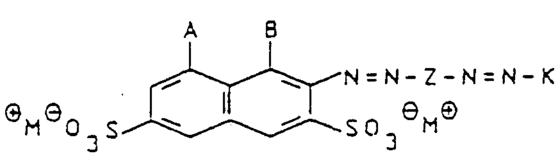

(VI)

dans laquelle A = OH, B = $NH_2$, avec des sels de diazonium de formule VII

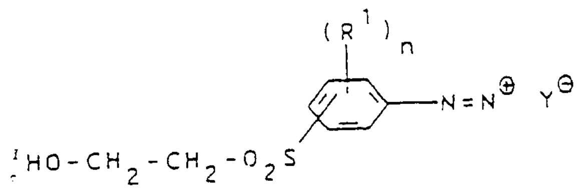

(VII)

3. Procédé de préparation de colorants trisazoïques de formule I selon la revendication 1, procédé caractérisé en ce que l'on copule des colorants monoazoïques de formule VIII

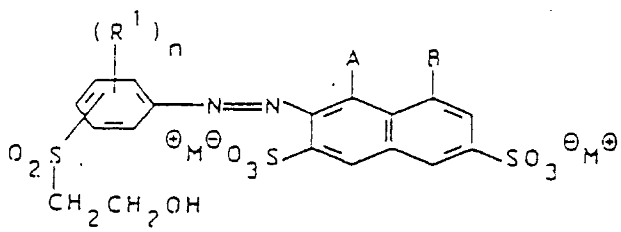

(VIII)

dans laquelle A = $NH_2$ et B = OH, avec des colorants monoazoïques diazotés de formule IX

$Y^{\ominus}\ {}^{\oplus}N = N\text{-}Z\text{-}N = N\text{-}K$ (IX)

4. Procédé selon une ou plusieurs des revendications 1 à 3, caractérisé en ce que $R^1$ est l'hydrogène.

5. Procédé selon une ou plusieurs des revendications 1 à 4, caractérisé en ce que
   $R^2$ est un groupe OH, $NH_2$,

H
$N-CH_2CH_2OH$,

$N(CH_2CH_2OH)_2$ ou

H
$-N-CH_2COOH$,

   $R^3$ est l'hydrogène ou un groupe OH, $NH_2$,

H
$N-CH_2CH_2OH$,

$N(CH_2CH_2OH)_2$,

H H H O
$N-CH_2COOH$, $N-C_6H_5$ ou $N-C-NH_2$,

et

$R^4$ est l'hydrogène ou le groupe $CH_3$, $C_2H_5$, $OCH_3$, $OC_2H_5$, O-$CH_2CH_2$-$OCH_3$ ou $SO_3H$.

**6.** Procède selon une ou plusieurs des revendications 1 à 5, caractérisé en ce que A = OH et B = $NH_2$.

**7.** Procédé selon une ou plusieurs des revendications 1 à 6, caractérisé en ce que $M^{\oplus}$ = $Li^{\oplus}$ et/ou $Na^{\oplus}$ et/ou

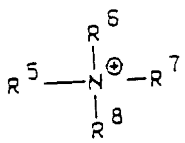

$R^5$, $R^6$, $R^7$ et $R^8$ étant l'hydrogène ou des alkyles avec de 1 à 4 atomes de carbone pouvant avoir comme substituant un hydroxyle ou un groupe -$OCH_2CH_2OH$.

**8.** L'emploi des colorants trisazoïques hydrosolubles obtenus selon une ou plusieurs des revendications 1 à 7 pour teindre des matières fibreuses naturelles ou synthétiques, en particulier du cuir, et pour en préparer des encres d'imprimerie et des liquides d'inscription pour le procédé d'impression à jet d'encre.